# EUROPÄISCHE PATENTSCHRIFT

(11) **EP 3 582 591 B1**
(45) Veröffentlichungstag und Bekanntmachung des Hinweises auf die Patenterteilung: **12.10.2022**
(21) Anmeldenummer: 19179562.4
(22) Anmeldetag: 12.06.2019
(51) Int. Cl.: H05B 45/10

(54) **ANSTEUERVORRICHTUNG FÜR EINE LED-LEUCHTE UND VERFAHREN ZUR ANSTEUERUNG EINER LED-LEUCHTE**
CONTROL DEVICE FOR AN LED LIGHT AND METHOD FOR CONTROLLING A LED LIGHT
DISPOSITIF DE COMMANDE POUR UN LUMINAIRE À DEL ET PROCÉDÉ DE COMMANDE D'UN LUMINAIRE À DEL

(30) Priorität: 14.06.2018 DE 102018209561
(43) Veröffentlichungstag der Anmeldung: 18.12.2019
(73) Patentinhaber: H4X e.U., 8055 Graz (AT)
(72) Erfinder: Hierzer, Andreas, 8010 Graz (AT)
(74) Vertreter: Isarpatent

(56) Entgegenhaltungen:
- EP-A1- 3 154 316
- WO-A2-2014/117193
- DE-A1-102013 108 257
- DE-A1-102015 102 533
- DE-A1-102016 217 332
- DE-U1-202017 105 722
- US-A1- 2014 191 670
- Quad- ET AL: "A forum for the exchange of circuits, systems, and software for real-world signal processing a Li-Ion BATTERY CHARGING REQUIRES ACCURATE VOLTAGE SENSING (page 3)", Jody Lapham, 1. Januar 1997 (1997-01-01), XP055639446, Gefunden im Internet: URL:https://www.analog.com/media/en/analog -dialogue/volume-31/number-2/articles/volu me31-number2.pdf#page=19 [gefunden am 2019-11-06]

## Beschreibung

### TECHNISCHES GEBIET DER ERFINDUNG

Die Erfindung betrifft eine Ansteuervorrichtung für LEDs einer Leuchte, insbesondere einer als Downlight oder Wallwasher implementierten wand- oder deckenmontierten Leuchte, eine Leuchte sowie ein Verfahren zur Ansteuerung von LED-Modulen einer Leuchte.

### TECHNISCHER HINTERGRUND

In speziellen Beleuchtungsanwendungen wie etwa in der Gebäudebeleuchtung oder der Veranstaltungstechnik können LED-Leisten oder LED-Arrays hoher Leistung zum Einsatz kommen, welche auch als "Wallwasher" bezeichnet werden. Derartige LED-Leuchten können beispielsweise als Fluter zur punktuellen oder streifenförmigen linearen oder spotartigen Beleuchtung von ausgedehnten ebenen Flächen, wie etwa Wänden oder Fassaden, eingesetzt werden, wie etwa beispielhaft in der DE 10 2016 217 332 A1 erläutert.

Für die Ansteuerung von LED-Leuchtmitteln solcher Leuchten ist es wünschenswert, das Ansteuerkonzept flexibel an das Leuchtendesign und die angestrebte Leuchtencharakteristik anpassen zu können. Außerdem sind solche Leuchten häufig modular aufgebaut und das Ansteuerkonzept sollte sich an die Modularität der Leuchte anpassen können. Die Druckschrift DE 20 2017 105 722 U1 beispielsweise offenbart einen Digital-zu-Widerstandswert-Wandler für einen Linearregler zur Versorgung von LEDs in Kraftfahrzeugen.

Die Druckschrift DE 10 2013 108 257 A1 offenbart ein Verfahren und eine Einrichtung zum Dimmen von Licht emittierenden Dioden (LED) durch Kombination einer Stromsteuerung und einer Steuerung mittels Pulsweitenmodulation. Durch die Stromsteuerung erfolgt eine Grobannäherung an die einzustellende Helligkeit, und durch die überlagerte Pulsweitenmodulation erfolgt eine Feinannäherung an eine einzustellende Helligkeit der LED in der Weise, dass mit der Frequenz der Pulsweitenmodulation Stromwerte wenigstens eine Stufe unterhalb eines Sollwertes und wenigstens eine Stufe oberhalb eines Sollwertes an eine gesteuerte Gleichstromquelle übergeben werden. Ein Tastverhältnis wird durch die Pulsweitenmodulation so gewählt, dass sich scheinbar ein mittlerer Wert für die Helligkeit der LED ergibt.

Die Druckschrift EP 3 154 316 A1 offenbart eine Steuerschaltung für einen Spannungswandler mit einem Schaller, welcher eine Vielzahl von parallel geschalteten Stromführungszweigen mit Widerständen unterschiedlicher Widerstandswerte und einen Kontaktgeber aufweist.

Die Druckschrift WO 2014/117193 A2 offenbart eine Vorrichtung zum Betreiben von LEDs, aufweisend ein Treiber-Modul, und ein von dem Treiber-Modul angesteuertes LED-Modul mit wenigstens einer LED. Das LED-Modul wird über einen ersten Anschluss von dem Treiber-Modul mit einem Strom gespeist, und ein zweiter Anschluss ist vorhanden. Das LED-Modul ist über einen dritten Anschluss, der als Daten-Kanal ausgebildet ist, mit dem Treiber-Modul verbunden. Auf dem Daten-Kanal liegt eine Spannung an, die von dem Treiber-Modul gespeist wird.

### ZUSAMMENFASSUNG DER ERFINDUNG

Eine der Aufgaben der Erfindung besteht darin, flexible und skalierbare Lösungen für die verlustarme Ansteuerung von Leuchtdioden zu finden.

Diese und andere Aufgaben werden durch eine Ansteuervorrichtung für LED-Leuchtmittel einer Leuchte, durch eine Leuchte und durch ein Verfahren zur Ansteuerung von LED-Leuchtmitteln einer LED-Leuchte gelöst, die in den beigefügten Ansprüchen definiert sind.

Eine wesentliche Idee der Erfindung besteht darin, eine kombinierte Ansteuerung für LED-Leuchtmittel aus einem Stromregler und einem Digital-Analog-Wandler zu realisieren, so dass ein Ansteuersignal digital erzeugt wird, aber die tatsächliche Ansteuerung des Stromreglers analog erfolgt. Eine derartige hybride Ansteuerung ermöglicht es, flexible und mit gängigen Steuersystemen kompatible Ansteuerschaltungen zu verwenden, die beispielsweise auf der Basis von DALI-oder Zig Bee-Standards operieren können. Gleichzeitig jedoch wird ein für digitale Ansteuersignale typisches hochfrequentes Flickern bei der Ansteuerung des Stromreglers vermieden, welches zu störenden Artefakten in der Lichtabstrahlung führen kann.

Die Verwendung der hybriden Ansteuerung ermöglicht zudem eine flexible modulare Anordnung der einzelnen Komponenten für einen kompakten und designorientierten Aufbau von LED-Leuchten. Zudem kann die vorgezogene Digital-Analog-Wandlung der Ansteuersignale zu einer besseren Effizienz des angesteuerten Schaltreglers führen.

Eine Schaltung aus Spannungsteiler und Tiefpass erster oder höherer Ordnung bietet eine einfach zu implementierende Lösung, um digitale Informationsignale in analoge Signale umzusetzen. Dies ermöglicht es in vorteilhafter Weise, Steuerinformationen für den Stromregler mit einer gleichbleibenden Frequenz über eine Variation des Tastgrades zu übertragen. Ein R2R-Netzwerk bietet ebenfalls eine einfach zu implementierende Lösung für eine Digital-zu-Analog-Umsetzung. Bei einem R2R-Netzwerk wird ein binär kodierter Eingangswert über ein kaskadiertes Netzwerk geschalteter Spannungsteiler in eine abgestufte Ausgangsspannung gewandelt.

Ein Linearregler bietet eine gute Spannungsstabilisierung und wird als einstellbare Konstantstromquelle ausgeführt, welche Stromänderungen, die als Folge von Änderungen des Lastwiderstandes auftreten, durch eine gezielte Variation der Betriebsspannung bzw. des Innenwiderstandes der Konstantstromquelle dynamisch ausgleichen kann.

Die Konstantstromquelle bietet den Vorteil, dass hohe Ströme sehr genau und schnell geregelt werden können. Außerdem kann der Schaltungsaufbau mit leicht verfügbaren Standardbauteilen realisiert werden.

Durch die Verteilerarchitektur aus dem zentralen Steuersignalgenerator kann die Leuchmittelmodulauswahl prinzipiell unbegrenzt skaliert werden.

Hochvolt-LEDs sind mit Gleichspannung betriebene LEDs, deren Betriebsspannung möglichst nahe an der effektiven Netzspannung geführt wird. Daher können eingesetzte LED-Treiber mit wenigen Komponenten auskommen.

Die ein oder mehreren LED-Leuchtmittel können Niedervolt-LEDs aufweisen. Niedervolt-LEDs sind ebenso wie Hochvolt-LEDs mit Gleichspannung betriebene LEDs, deren Betriebsspannung allerdings signifikant unterhalb der Netzspannung liegt und die deshalb eine separate Spannungsumsetzung benötigen. Niedervolt-LEDs haben aber meist einen etwas besseren Wirkungsgrad als Hochvolt-LEDs.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 eine teilweise bestückte Gehäusekomponente einer LED-Leuchte in einer perspektivischen Unteransicht gemäß einer Ausführungsform der Erfindung;
Fig. 2 eine schematische Schnittansicht durch die Gehäusekomponente einer LED-Leuchte von Fig. 1 gemäß einer weiteren Ausführungsform der Erfindung;
Fig. 3 ein schematisches Blockschaubild funktioneller Komponenten einer Ansteuervorrichtung für eine LED-Leuchte gemäß einer weiteren Ausführungsform der Erfindung;
Fig. 4 ein abstrahiertes Ablaufdiagramm eines beispielhaften Verfahrens zur Ansteuerung einer LED-Leuchte gemäß einer weiteren Ausführungsform der Erfindung; und
Fig. 5 ein schematisches Blockschaubild einer möglichen Schaltung für einen Linearregler als einstellbare Konstantstromquelle.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### AUSFÜHRLICHE BESCHREIBUNG VON AUSFÜHRUNGSBEISPIELEN

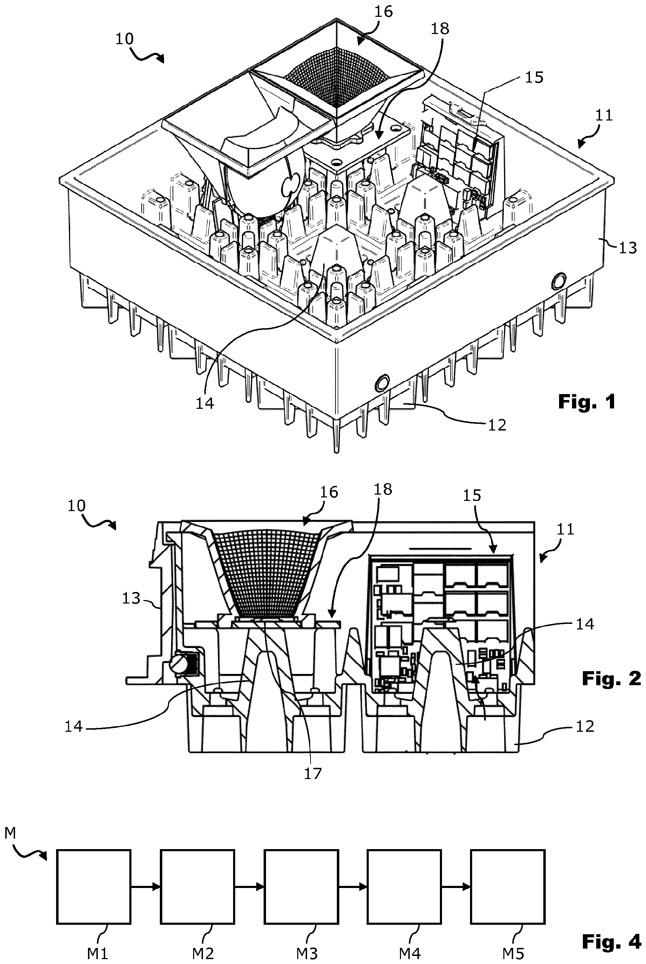

Fig. 1 zeigt eine teilweise bestückte Gehäusekomponente 11 einer Leuchte 10. Dabei weist die Leuchte 10 ein oder mehrere Leuchtdioden ("light emitting diodes", LEDs) als aktive Leuchtmittel auf. Die Leuchte 10 kann daher auch als LED-Leuchte bezeichnet werden. Die Leuchte 10 kann zum Beispiel in eine beispielsweise abgehängte Decke eingebaut oder an einer Decke befestigt sein, wobei eine Anbringung an anderen Teilen eines Bauwerks, etwa im Wandbereich, ebenso möglich ist. Die Leuchte 10 ist vor ihrer Herstellung und Lieferung vom Kunden, beispielsweise durch einen Lichtdesigner, frei konfigurierbar, beispielsweise um mehrere mittels der Leuchte 10 darzustellende Lichteffekte in der gewünschten Weise in der Leuchte 10 zu vereinen.

Die Leuchte 10 der Fig. 1 weist eine Gehäusekomponente 11 auf, die beispielsweise einstückig aus einem Metallmaterial, wie etwa Aluminium oder einer Aluminiumlegierung, druckgegossen sein kann. Dabei kann die Gehäusekomponente 11 - wie schematisch in Figur 1 dargestellt - eine im Wesentlichen quadratische Grundfläche aufweisen. Das Verhältnis von Höhe zu Kantenlänge der quadratischen Grundfläche der Gehäusekomponente 11 kann deutlich kleiner als Eins sein, so dass die Gehäusekomponente 11 hinsichtlich ihrer Außenform die Grundform eines flachen Quaders aufweisen kann.

Die Gehäusekomponente 11 weist eine Basis 12 auf, die von seitlichen Gehäusewänden 13 begrenzt wird, d.h. die Basis 12 stellt einen Boden der Gehäusekomponente 11 dar und umgrenzt gemeinsam mit den Gehäusewänden einen Innenbereich der Gehäusekomponente 11. Der in Fig. 1 nach oben weisende Teil der Gehäusekomponente ist dabei offen.

Wie in Fig. 1 beispielhaft dargestellt, kann bzw. können auf der Basis 12 in dem Innenbereich ein vorsprungsartiger Abschnitt 14 oder eine Vielzahl von vorsprungartigen Abschnitten 14 ausgebildet werden, der/die ebenfalls einstückig mit der Gehäusekomponente 11 verbunden sein kann/können.

Die vorsprungartigen Abschnitte 14 können Funktionsfelder der Leuchte 10 definieren - in Fig. 1 sind beispielhaft neun derartige Funktionsfelder dargestellt, die etwa in einer 3 × 3 Funktionsfelder oder 2 × 2 Funktionsfelder aufweisenden quadratischen Matrix angeordnet sind. Die Funktionsfelder sind dabei in etwa gleich groß und für sich genommen jeweils ebenfalls quadratisch. Es sollte dabei klar sein, dass auch andere Aufteilungen für die Funktionsfelder der Leuchte 10 möglich sind, beispielsweise ein oder mehrere Einzelspots in einer Reihe oder eine andere irreguläre Anordnung von Einzelspots.

Die Gehäusekomponente 11 der Fig. 1 kann zur Ausbildung einer Leuchte 10 in einen in den Figuren nicht explizit dargestellten Einbaurahmen eingesetzt werden. Der Einbaurahmen kann zum Einbau beispielsweise in eine Decke an dessen umlaufender Außenseite mit Strukturen ausgestattet werden, die zum Beispiel den "randlosen" Einbau, etwa mittels Einspachteln, erleichtern.

Die Leuchte 10 soll es ermöglichen, durch entsprechendes Schalten bzw. Steuern zwischen unterschiedlichen Lichteffekten oder Lichtszenen auf vielseitige Weise zu wechseln, so dass die Leuchte 10 eine flexible und kompakte Beleuchtungslösung bereitstellt, mit der sich die unterschiedlichsten Beleuchtungseffekte erzielen lassen. Hierzu werden bei der Leuchte 10 eine Mehrzahl optischer Komponenten 16 implementiert, bei denen es sich beispielsweise jeweils um Reflektoren handeln kann. Im dargestellten Beispiel der Fig. 1 sind zwei jeweils einem der Funktionsfelder zugeordnete optische Komponenten 16 mit in Draufsicht quadratischer Außenform illustriert. In Fig. 1 sind aus Gründen der Übersichtlichkeit nur zwei Reflektoren 16 gezeigt, wobei jedoch die Leuchte 10 in einem fertiggestellten Zustand auf allen der Funktionsfelder entsprechende optische Komponenten aufweisen kann.

Von der Leuchte 10 abzugebendes Licht wird von aktiven elektrischen Leuchtmitteln 17 bereitgestellt, die beispielsweise als LEDs oder Gruppen von LEDs ausgebildet sind. Die Leuchtmittel 17 sind beispielhaft in Fig. 2 dargestellt, die eine Schnittansicht durch die Gehäusekomponente 11 der Leuchte 10 illustriert. Jedes der Leuchtmittel 17 ist in (nicht explizit dargestellten) Leuchtmittelaufnahmen oder Leuchtmittelsteckplätzen auf einer Leuchtmittelträgerplatine 18 angeordnet, die die verschiedenen LEDs bzw. Gruppen von LEDs trägt und eine entsprechende elektrische Energieversorgung der Leuchtmittel 17 bereitstellt. Dabei können die Leuchtmittel 17 bzw. die Leuchtmittelaufnahmen jeweils einem der Funktionsfelder zugeordnet sein. Mehrere separate Leuchtmittelträgerplatinen 18 können daher im Innenbereich der Gehäusekomponente 11 untergebracht werden.

Die optische Komponenten 16 verleihen dem durch die Leuchtmittel 17 abgestrahlten Licht eine jeweilige Abstrahlcharakteristik, beispielsweise die Abstrahlcharakteristik eines Downlights. Die Abstrahlcharakteristik kann somit je nach Funktionsfeld angepasst werden: Manche der Funktionsfelder können somit die Abstrahlcharakteristik einer Einzelleuchte aufweisen, die bei einer Deckenmontage der Leuchte 10 einen beispielsweise kreisrunden oder elliptischen Lichtkegel erzeugt. Andere Funktionsfelder können die Abstrahlcharakteristik eines Wallwashers erzeugen, d.h. eine Hauptabstrahlrichtung aufweisen, die schräg zur Basis der Gehäusekomponente 11 liegt. Mit einer derartigen Wallwasher-Charakteristik kann beispielsweise eine Wand beleuchtet werden kann.

Die Leuchte 10 kann generell als eine einheitliche Leuchte ausgebildet werden, die mehrere Leuchtmittel 17 und jeweils zugeordnete optische Komponenten 16 aufweist. Die Leuchtmittel 17 können bei der Leuchte 10 zur Erzeugung unterschiedlicher Lichteffekte flexibel, beispielsweise einzeln oder in verschiedenen Gruppen, schalt- und/oder steuerbar sein.

Die Leuchte 10 ist durch den modularen Leuchtmittelaufbau in Funktionsfeldern sehr flexibel und leicht skalierbar. Zudem wird eine leistungsstarke Möglichkeit zur Erzeugung unterschiedlichster Beleuchtungsszenarien mit unterschiedlichen Kombinationen aus Abstrahlcharakteristiken und Farbtemperaturen geschaffen. Durch die optionale Verwendung von Reflektoren als optische Komponenten kann eine präzise Lichtlenkung mit hohem Wirkungsgrad und effektiver Blendungsreduzierung erfolgen. Die Leuchte 10 kann beispielsweise mit einem Kugelschnappsystem in geringer Einbautiefe ohne Spezialwerkzeuge in Wände oder Decken montiert werden.

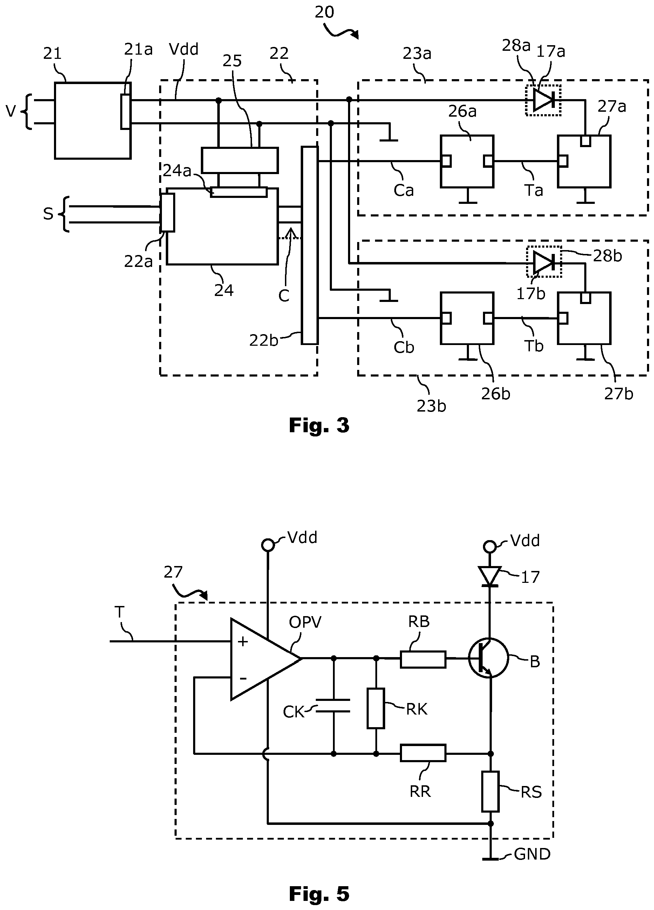

Fig. 2 zeigt eine schematische Schnittansicht durch die Gehäusekomponente 11 der Leuchte 10 in Fig. 1. Wie bereits schematisch in Fig. 1 angedeutet weist die Leuchte 10 eine Ansteuervorrichtung 20 auf, die in dem in Fig. 1 und 2 illustrierten Beispiel modular in der Gehäusekomponente 11 der Leuchte 10 verteilt ist. Zum einen weist die Leuchte 10 eine Steuerungsplatine 15 auf, die über eine digitale Eingangsschnittstelle digitale Ansteuersignale für die Leuchte 10 empfangen kann, wie etwa DALI-Steuersignale oder ZigBee-Steuersignale. Die Steuerungsplatine 15 kann über ein weiter unten im Bezug auf Fig. 3 und 4 erläutertes Steuermodul mit einem Steuersignalgenerator verfügen.

Zum anderen weist die Leuchte 10 Leuchtmittelmodule auf, die auf den Leuchtmittelträgerplatinen 18 verteilt werden können. Die Leuchtmittelmodule werden ebenfalls weiter unten im Zusammenhang mit Fig. 3 und 4 erläutert. Die Komponenten auf den Leuchtmittelträgerplatinen 18 (Leuchtmittelmodule) sowie die Komponenten auf der Steuerungsplatine 15, z.B. der Steuersignalgenerator, können über einen in Fig. 2 nicht explizit dargestellten Gleichrichter mit einer Versorgungsspannung versorgt werden. Der Gleichrichter stellt dabei einerseits eine Leuchtmittelversorgungsspannung für die Leuchtmittelmodule bzw. die in den Leuchtmittelmodulen aufgenommenen Leuchtmittel 17 bereit, andererseits eine Versorgungsspannung für das Steuermodul. Die Versorgungsspannung für das Steuermodul kann gegebenenfalls über einen zusätzlichen Gleichspannungswandler für die elektronischen Komponenten des Steuermoduls, wie etwa den Steuersignalgenerator in eine passende Versorgungsgleichspannung umgesetzt werden.

Beispielsweise kann die Leuchte 10 über eine zentrale Steuerungsplatine 15 verfügen, auf der sämtliche externen Ansteuersignale (DALI- oder ZigBee-Steuersignale) verarbeitet und als digitale Steuersignale an mehrere angeschlossene Leuchtmittelmodule auf verteilt in der Leuchte 10 angeordneten Leuchtmittelträgerplatinen 18 verteilt werden. Dabei können die Komponenten der zentralen Steuerungsplatine 15 über kabelgebundene Steuerleitungen mit Komponenten der jeweiligen Leuchtmittelträgerplatinen 18 gekoppelt sein.

Die externen Ansteuersignale (DALI- oder ZigBee-Steuersignale) können entweder drahtgebunden über eine entsprechende Steckerbuchse oder drahtlos über einen geeigneten Funktransceiver oder eine geeignete WLAN-Zugriffsschaltung auf die zentrale Steuerungsplatine 15 geführt werden. Der Gleichrichter kann über einen Netzspannungseingang verfügen, über den eine Netzwechselspannung an die Leuchte 10 angelegt werden kann.

Die LED-Leuchtmittel 17 der Leuchte 10 sind analog dimmbar. Hierfür ist eine analoge Dimmung über jeweils den verschiedenen Leuchtmittelmodulen lokal zugeordnete Stromregler vorgesehen, die in Reihe mit den jeweiligen LED-Leuchtmitteln 17 geschaltet sind.

Fig. 3 stellt ein schematisches Blockschaubild funktioneller Komponenten einer Ansteuervorrichtung 20 für eine LED-Leuchte dar. Insbesondere dient die Ansteuervorrichtung 20 für LED-Leuchtmittel 17 der im Zusammenhang mit den Fig. 1 und 2 erläuterten Leuchte 10. Komponenten der Ansteuervorrichtung 20 können dabei in bzw. an der Gehäusekomponente 11 der Leuchte 10 montiert bzw. implementiert werden. Die Aufteilung der Komponenten der in Fig. 3 dargestellten Ansteuervorrichtung auf Steuerungsplatine 15 und/oder Leuchtmittelträgerplatinen 18 kann dabei bedarfsgerecht erfolgen. Insbesondere kann es auch möglich sein, alle der Komponenten auf einer einzelnen Platine unterzubringen, wenn eine Aufteilung in Steuerplatine und Leuchtmittelträgerplatinen nicht gewünscht oder zweckmäßig ist.

Die Ansteuervorrichtung 20 weist einen Gleichrichter 21 auf, der dazu dient, eine Wechselspannung V in eine Leuchtmittelversorgungsspannung Vdd zu richten. Die Wecheselspannung V kann dabei beispielsweise eine 230V oder 115V Netzwechelspannung sein, die über einen Netzstecker auf den Gleichrichter 21 geführt wird. Die Leuchtmittelversorgungsspannung Vdd kann beispielsweise 48VDC betragen und als unipolare oder bipolare Spannung an Komponenten der Ansteuervorrichtung 20 zur Verfügung gestellt werden.

Mit einem Spannungsausgang 21a des Gleichrichters 21 sind zunächst Leuchtmittelmodule 23a bzw. 23b gekoppelt, welche jeweils ein oder mehrere erste LED-Leuchtmittelaufnahmen 28a bzw. 28b zur Aufnahme von ein oder mehreren LED-Leuchtmitteln 17a bzw. 17b aufweisen. Der Gleichrichter 21 versorgt nur ein einziges Leuchtmittelmodul mit einer Leuchtmittelversorgungsspannung Vdd. In manchen Varianten sind mehr als zwei Leuchtmittelmodule 23a bzw. 23b vorgesehen, die jeweils in Parallelschaltung an den Spannungsausgang 21a des Gleichrichters 21 angekoppelt werden und jeweils mit der Leuchtmittelversorgungsspannung Vdd versorgt werden können.

In den Leuchtmittelmodulen 23a bzw. 23b ist jeweils ein Stromregler 27a bzw. 27b angeordnet, welcher in Reihe zu den ein oder mehreren LED-Leuchtmittelaufnahmen 28a bzw. 28b geschaltet ist. In Fig. 3 ist die Reihenschaltung aus LED-Leuchtmittelaufnahmen 28a bzw. 28b und Stromregler 27a bzw. 27b so dargestellt, dass der Stromregler 27a bzw. 27b zwischen LED-Leuchtmittelaufnahmen 28a bzw. 28b und Masse angeordnet ist. Es sollte jedoch klar sein, dass auch eine umgekehrte Reihenfolge der LED-Leuchtmittelaufnahmen 28a bzw. 28b und Stromregler 27a bzw. 27b implementiert werden kann. Zudem weist jedes der Leuchtmittelmodule 23a bzw. 23b einen Digital-Analog-Wandler 26a bzw. 26b auf, welcher jeweils zwischen einen Modulsteuersignaleingang des Leuchtmittelmoduls 23a bzw. 23b und einen Steuereingang des jeweils zugehörigen Stromregler 27a bzw. 27b gekoppelt ist.

In der Folge wird aus Gründen der leichteren Lesbarkeit und Übersichtlichkeit jeweils nur auf ein generisches Leuchtmittelmodul 23 unter Weglassung der Suffixe a/b Bezug genommen. Es sollte dabei klar sein, dass jedes der gegebenenfalls mehreren an den Gleichrichter 21 angekoppelten Leuchtmittelmodule 23a, 23b der Ansteuervorrichtung 20 über ein oder mehrere der im Folgenden dargestellten Merkmale und Merkmalskombinationen verfügen kann. Insbesondere kann es möglich sein, dass alle der Leuchtmittelmodule 23a, 23b den funktionell gleichen Aufbau an Komponenten aufweisen. Alternativ dazu kann es auch möglich sein, verschiedene Leuchtmittelmodule 23a, 23b einer Leuchte 10 mit unterschiedlichem Aufbau und Funktion der Komponenten zu implementieren, insbesondere wenn verschiedenartige LED-Leuchtmittel 17a bzw. 17b in die verschiedenen Leuchtmittelmodule 23a, 23b eingesetzt werden sollen.

Die Ansteuervorrichtung 20 weist ferner einen Steuersignalgenerator 24 auf, der beispielsweise auf einem Steuermodul 22 angeordnet sein kann. Der Steuersignalgenerator 24 kann beispielsweise als Mikroprozessor oder Mikrocontroller ausgebildet werden und kann über einen internen Konfigurationsspeicher zur Speicherung von programmierten Ansteuerkonfigurationen für die Leuchte 10 verfügen. Das Steuermodul 22 kann in einer Leuchte 10 dabei mitsamt dem Steuersignalgenerator 24 auf einer Steuerungsplatine 15 angeordnet sein. Diese Steuerungsplatine 15 kann entfernt von ein oder mehreren Leuchtmittelträgerplatinen 18 innerhalb der Leuchte 10 angeordnet sein, die jeweils ein oder mehrere Leuchtmittelmodule 23a bzw. 23b und Digital-Analog-Wandler 26a bzw. 26b aufweisen. Die Steuerungsplatine 15 sowie die ein oder mehreren Leuchtmittelträgerplatinen 18 können dabei standardisierte Anschlussbuchsen aufweisen, um untereinander beispielsweise über Kabel flexibel und variabel verbunden zu werden.

Der Steuersignalgenerator 24 wird von dem Gleichrichter 21 mit Versorgungsspannung versorgt. Dazu kann es möglich sein, den Steuersignalgenerator 24 über einen Gleichspannungswandler 25 wie etwa einen Abwärtswandler zwischen den Spannungsausgang 21a des Gleichrichters 21 und einen Versorgungseingang 24a des Steuersignalgenerators 24 anzukoppeln. Der Abwärtswandler 25 kann beispielsweise eine Versorgungsspannung von 48VDC des Gleichrichters 21 auf eine für Mikroprozessoren oder Mikrocontroller übliche Versorgungsspannung von 3,3VDC heruntersetzen.

Der Steuersignalgenerator 24 ist prinzipiell dazu ausgelegt, ein digitales Leuchtmittelsteuersignal C zu erzeugen und an einem Generatorausgang bereitzustellen. Hierzu kann der Steuersignalgenerator 24 über eine digitale Eingangsschnittstelle 22a verfügen. An dieser digitalen Eingangsschnittstelle 22a werden digitale Eingangssignale als externes Ansteuersignal, wie etwa DALI-Steuersignale oder ZigBee-Steuersignale S, in den Steuersignalgenerator 24 eingespeist. Auf der Basis der empfangenen digitalen Eingangssignale an der Eingangsschnittstelle 22a kann der Steuersignalgenerator 24 digitale Leuchtmittelsteuersignale Sa bzw. Sb für verschiedene der Leuchtmittelmodule 23a bzw. 23b erzeugen.

Das externe Ansteuersignal, wie etwa das DALI-Steuersignal oder ZigBee-Steuersignal S, kann beispielsweise einen Sollwert für die Dimmung von LED-Leuchtmitteln 17 angeben. Insbesondere können bei LED-Leuchtmitteln 17 auf verschiedenen Leuchtmittelmodulen 23 verschiedene Sollwerte durch das DALI-Steuersignal oder ZigBee-Steuersignal S vorgegeben werden. Der Steuersignalgenerator 24 addressiert dann die jeweiligen Leuchtmittelmodule 23 je nach gewünschten Sollwerten. Dabei kann der Steuersignalgenerator 24 das digitale Leuchtmittelsteuersignal C so modulieren, dass Steuerinformationen bei konstanter Signalfrequenz über eine Variation des Tastgrades übertragen werden.

Der Digital-Analog-Wandler 26 der Leuchtmittelmodule 23 ist mit dem Generatorausgang des Steuersignalgenerators 24 über einen Steuermodulausgang 22b gekoppelt, an dem die jeweiligen Ansteuersignale Ca, Cb für die verschiedenen Leuchtmittelmodule 23 aufgeteilt werden. Der Digital-Analog-Wandler 26 der Leuchtmittelmodule 23 wandelt das jeweilige digitale Leuchtmittelsteuersignal Ca, Cb des Steuersignalgenerators 24 in ein analoges Leuchtmittelsteuersignal Ta bzw. Tb. Dieses analgoe Leuchtmittelsteuersignal Ta bzw. Tb kann dann in den Steuereingang des jeweils zugehörigen Stromregler 27 eingespeist werden.

Der Digital-Analog-Wandler 26 kann beispielsweise eine Reihenschaltung aus einem Spannungsteiler und einem Tiefpass erster oder höherer Ordnung aufweisen. Alternativ dazu kann der Digital-Analog-Wandler 26 auch eine Reihenschaltung aus einem R2R-Netzwerk und einem Tiefpass zweiter Ordnung aufweisen. Ein R2R-Netzwerk kann beispielsweise durch eine kaskadierte Folge geschalteter Spannungsteiler implementiert werden, durch den das digitale Leuchtmittelsteuersignal C in ein abgestuftes analoges Signal umgesetzt wird. Dieses analoge Signal kann dann durch die Tiefpasskomponente auf hochfrequente PWM-Anteile bereinigt werden. Beide Optionen ermöglichen eine stabile und flickerfreie Ansteuerung des Stromregler 27 und damit eine gleichmäßige Leucht- und Helligkeitscharakteristik des jeweils zugehörigen LED-Leuchtmittels 17.

Dies ist insbesondere dann der Fall, wenn der Stromregler 27 einen Linearregler (etwa einen serienstabilisierenden Längsregler) oder einen Schaltregler aufweist. Falls für die LED-Leuchtmittel 17 Hochvolt-LEDs eingesetzt werden kann der Stromregler 27 ein Linearregler sein. Hochvolt-LEDs nutzen in aller Regel nahezu die gesamte Versorgungsspannungsbreite, so dass ein Linearregler bei Hochvolt-LEDs mit guter Leistungseffizienz eingesetzt werden kann. Falls für die LED-Leuchtmittel 17 jedoch Niedervolt-LEDs eingesetzt werden, kann statt des Linearreglers ein Schaltregler als Stromregler 27 eingesetzt werden. In beiden Fällen ist ein verlustarmer Betrieb mit analogen Leuchtmittelsteuersignal Ta bzw. Tb möglich, da keine hochfrequenten Schaltvorgänge in dem Stromregler 27 ausgelöst werden müssen.

Fig. 5 zeigt ein schematisches Blockschaubild für die beanspruchte Implementierung eines Linearreglers 27 als einstellbare Konstantstromquelle. Der Linearregler weist einen als Spannungsfolger arbeitenden Operationsverstärker OPV auf. Dessen Ausgang ist über einen Basisstrombegrenzungswiderstand RB mit der Basis eines Bipolartransistor B - in Fig. 5 beispielhaft ein NPN-Bipolartransistor - gekoppelt. Der Ausgangsstrom des Bipolartransistors B wird über eine Spannungsteilerschaltung aus einem Rückkoppelwiderstand RR und einem Shuntelement RS qemessen, indem der Ausqanqsstrom am Mittelabgriff der Spannungsteilerschaltung eingespeist wird und über das Shuntelement RS gegenüber Masse GND abgeführt wird. Der Rückkoppelwiderstand RR gibt den Ausgangsstrom des Bipolartransistors B an den invertierenden Eingang des Operationsverstärkers OPV zurück, wo der Ausgangsstrom mit dem Referenzsollwert T verglichen wird. Da Shuntelement RS kann beispielsweise ein einzelner Shuntwiderstand oder auch eine Parallelschaltung aus mehreren Shuntwiderständen unterschiedlicher Widerstandswerte bzw. Leistungsaufnahmewerte aufweisen. Zwischen dem Ausgang des Operationsverstärkers OPV und dem Rückkoppelpfad ist weiterhin eine Kompensations- und Schwingungsdämpfungsschaltung mit einem schwingungsdämpfenden Kondensator CK und einem parallel dazu geschalteten Kompensationswiderstand RK vorgesehen. Die Kompensations- und Schwingungsdämpfungsschaltung CK, RK koppelt den Ausgang des Operationsverstärkers OPV mit dessen invertierenden Eingang.

Zwischen den Ausgang des Operationsverstärkers OPV und die Basis des Bipolartransistors B ist zudem ein Basisstrombegrenzungswiderstand RB in Reihe geschaltet, der den Betriebsstrom des Operationsverstärkers OPV begrenzt, um eine Übersteuerung zu vermeiden, sowie den Operationsverstärkers OPV im Falle einer Überlastung oder eines Defektes des Bipolartransistors B vor der Kollektorspannung Vdd schützt. Außerdem kann der Basisstrombegrenzungswiderstand RB eine stabilisierende Wirkung auf den Regelkreis haben, da der Verstärkungswert gedämpft wird.

Der in Fig. 5 als einfacher Bipolartransistor B dargestellte Transistor kann in manchen Fällen auch durch eine Darlingtontransistorschaltung mit höherer Stromverstärkung ersetzt werden, um etwaigen die Strommessung verfälschenden Basisstromanteilen im Shuntelement RS entgegenzuwirken. Eine derartige Darlingtontransistorschaltung kann aus zwei kaskadierten Bipolartransistoren bestehen, wobei der kleinere Transistor als Emitterfolger auf die Basis des größeren Transistors arbeitet, um den Stromverstärkungsfaktor des größeren Transistors zu erhöhen.

Alternativ dazu kann ein Linearregler als Stromregler beispielsweise auch einen als verstärkten Spannungsfolger beschalteten Transistor, beispielsweise einen Feldeffekt-Transistor, aufweisen. Dieser Transistor wird mit der zu regelnden Eingangsspannung gespeist. Die zu regelnde Eingangsspannung wird ferner über eine Spannungsteilerschaltung mit einer Bandabstandsreferenz auf ein Referenzniveau herabgesetzt, welches mit der Ausgangsspannung am Ausgang des Transistors mithilfe eines Operationsverstärkers vergleichen wird. Die Bandabstandsreferenz kann beispielsweise durch eine Z-Diode gebildet werden. Durch den Vergleich im Operationsverstärker wirkt das Ausgangssignal des Operationsverstärkers als regelndes Stellsignal für die Ansteuerung des Transistors, um den Linearregler als einstellbare Konstantstromquelle betreiben zu können.

Fig. 4 zeigt ein abstrahiertes Ablaufdiagramm eines beispielhaften Verfahrens M zur Ansteuerung einer LED-Leuchte, insbesondere zum Ansteuern von LED-Leuchtmitteln 17 der im Zusammenhang mit Fig. 1 und 2 erläuterten Leuchte 10. Das Verfahren M kann insbesondere unter Zuhilfenahme der in Fig. 3 gezeigten Ansteuervorrichtung 20 umgesetzt werden.

In einer ersten Stufe M1 wird mindestens ein Leuchtmittelmodul 23, welche ein oder mehrere LED-Leuchtmittel 17 aufweist, mit einer durch einen Gleichrichter 21 erzeugten Gleichspannung versorgt. Durch einen Steuersignalgenerator 24, welcher von dem Gleichrichter 21 mit Versorgungsspannung versorgt wird, wird in einer zweiten Stufe M2 ein digitales Leuchtmittelsteuersignal C erzeugt.

Dieses digitale Leuchtmittelsteuersignal C des Steuersignalgenerators 24 wird in einer dritten Stufe M3 in einen Digital-Analog-Wandler 26 eingespeist, so dass der Digital-Analog-Wandler 26 das digitale Leuchtmittelsteuersignal C in einer vierten Stufe M4 in ein analoges Leuchtmittelsteuersignal Ta bzw. Tb wandeln kann, beispielsweise mithilfe einer Reihenschaltung aus einem R2R-Netzwerk und einem Tiefpass zweiter Ordnung. Das derart gewandelte analoge Leuchtmittelsteuersignal Ta bzw. Tb dient in einer fünften Stufe M5 zur Einspeisung in einen Steuereingang eines Stromregler 27, welcher in Reihe zu den ein oder mehreren Leuchtmitteln 17 geschaltet ist. Der Stromregler 27 ist beispielsweise ein Linearregler (etwa ein serienstabilisierender Längsregler) oder ein Schaltregler.

Das digitale Leuchtmittelsteuersignal C erfolgt durch den Steuersignalgenerator 24 insbesondere auf der Basis eines an einer Eingangsschnittstelle 22a des Steuersignalgenerators 24 empfangenen DALI-Steuersignals oder ZigBee-Steuersignals S, welches beispielsweise einen Sollwert für die Dimmung der ein oder mehreren LED-Leuchtmittel 17 angibt. Dabei kann das digitale Leuchtmittelsteuersignal C Steuerinformationen bei konstanter Signalfrequenz über eine Variation des Tastgrades übertragen.

## Patentansprüche

1. Ansteuervorrichtung (20) für LED-Leuchtmittel einer Leuchte (10), umfassend:
ein erstes Leuchtmittelmodul (23a), welches ein oder mehrere Leuchtmittelaufnahmen (28a, 28b) aufweist, zur Aufnahme von jeweils einem ersten LED-Leuchtmittel (17a) der Leuchte (10);
einen in dem ersten Leuchtmittelmodul (23a) angeordneten ersten Stromregler (27a), welcher in Reihe zu den ein oder mehreren ersten Leuchtmittelaufnahmen (28a, 28b) geschaltet ist;
einen Steuersignalgenerator (24), welcher dazu ausgelegt ist, ein digitales Leuchtmittelsteuersignal (Ca) auf Basis eines empfangenen digitalen Steuersignals zu erzeugen und an einem Generatorausgang bereitzustellen; und
einen ersten Digital-Analog-Wandler (26a), welcher zwischen dem Generatorausgang des Steuersignalgenerators (24) und einen Steuereingang des ersten Stromregler (27a) gekoppelt ist und dazu ausgelegt ist, das digitale Leuchtmittelsteuersignal (Ca) des Steuersignalgenerators (24) in ein analoges Leuchtmittelsteuersignal (Ta) zu wandeln und in den Steuereingang des ersten Stromreglers (27a) einzuspeisen,
**dadurch gekennzeichnet,**
**dass** der erste Stromregler (27a) ein Linearregler ist, der als einstellbare Konstantstromquelle implementiert ist, und einen Operationsverstärker (OPV) einen Basisstrombegrenzungswiderstand (RB), einen Bipolartransistor (B) und eine Kompensations- und Schwingungsdämpfungsschaltung (CK, RK) aufweist, wobei der Ausgang des Operationsverstärker (OPV) über den Basisstrombegrenzungswiderstand (RB) mit der Basis des Bipolartransistors (B) und über die Kompensations- und Schwingungsdämpfungsschaltung (CK, RK), mit dem invertierenden Eingang des Operationsverstärkers (OPV) rückgekoppelt ist, und weiter ein Shuntelement (RS) zur Messung des Emitterstroms des Bipolartransistors (B) aufweist, sowie einen Rückkoppelwiderstand (RR) zwischen dem Shuntelement (RS) und dem invertierenden Eingang des Operationsverstärkers (OPV) aufweist.

2. Ansteuervorrichtung (20) gemäß Anspruch 1, weiterhin mit:
einem Gleichrichter (21), welcher dazu ausgelegt ist, eine Wechselspannung (V) in eine Leuchtmittelversorgungsspannung (Vdd) zu richten,
wobei das erste Leuchtmittelmodul (23a) mit einem Spannungsausgang (21a) des Gleichrichters (21) gekoppelt ist, und wobei der Steuersignalgenerator (24) mittels des Gleichrichters (21) mit Versorgungsspannung versorgt wird.

3. Ansteuervorrichtung (20) gemäß Anspruch 2, weiterhin mit:
einem Gleichspannungswandler (25), welcher zwischen dem Spannungsausgang (21a) des Gleichrichters (21) und einem Versorgungseingang (24a) des Steuersignalgenerators (24) geschaltet ist.

4. Ansteuervorrichtung (20) gemäß Anspruch 3, wobei der Gleichspannungswandler ein Abwärtswandler ist.

5. Ansteuervorrichtung (20) gemäß einem der Ansprüche 1 bis 4, wobei der erste Digital-Analog-Wandler (26a) eine Reihenschaltung aus einem Spannungsteiler und einem Tiefpass erster oder höherer Ordnung aufweist.

6. Ansteuervorrichtung (20) gemäß einem der Ansprüche 1 bis 5, wobei der Steuersignalgenerator (24) eine Eingangsschnittstelle (22a) aufweist und dazu ausgelegt ist, das digitale Leuchtmittelsteuersignal (Sa) auf Basis des an der Eingangsschnittstelle (22a) empfangenen digitalen Ansteuersignals, insbesondere eines DALI-Steuersignals oder ZigBee-Steuersignals (S), zu erzeugen.

7. Ansteuervorrichtung (20) gemäß Anspruch 6, wobei das digitale Ansteuersignal einen Sollwert für die Dimmung der oder mehrerer LED-Leuchtmittel (17a) des ersten Leuchtmittelmoduls (23a) angibt.

8. Ansteuervorrichtung (20) gemäß einem der Ansprüche 1 bis 7, weiterhin mit:
mindestens einem zweiten, mit dem Spannungsausgang (21a) des Gleichrichters (21) gekoppelten Leuchtmittelmodul (23b), welches ein oder mehrere zweite LED-Leuchtmittel (17b) aufweist;
mindestens einem in dem zweiten Leuchtmittelmodul (23b) angeordneten Stromregler (27b), welcher in Reihe zu den ein oder mehreren zweiten LED-Leuchtmitteln (17b) geschaltet ist; und
mindestens einem zweiten Digital-Analog-Wandler (26b), welcher zwischen den Generatorausgang des Steuersignalgenerators (24) und einen Steuereingang des zweiten Stromreglers (27b) gekoppelt ist und dazu ausgelegt ist, das digitale Leuchtmittelsteuersignal (Cb) des Steuersignalgenerators (24) in ein analoges Leuchtmittelsteuersignal (Tb) zu wandeln und in den Steuereingang des zweiten Stromreglers (27b) einzuspeisen.

9. Leuchte (10), umfassend eine Gehäusekomponente (11), LED-Leuchtmittel und eine Ansteuervorrichtung (20) gemäß einem der Ansprüche 2 bis 8.

10. Leuchte (10) gemäß Anspruch 9, wobei der Steuersignalgenerator (24) auf einer Steuerungsplatine (15) angeordnet ist, das erste Leuchtmittelmodul (23a) und der erste Digital-Analog-Wandler (26a) auf einer von der Steuerungsplatine (15) separaten Leuchtmittelträgerplatine (18) angeordnet sind, und die Steuerungsplatine (15) über ein Kabel mit der Leuchtmittelträgerplatine (18) verbunden ist.

11. Leuchte (10) gemäß einem der Ansprüche 9 bis 10, wobei die ein oder mehreren ersten LED-Leuchtmittel (17a) Hochvolt-LEDs aufweisen.

12. Leuchte (10) gemäß einem der Ansprüche 9 bis 11, wobei der Gleichrichter (21) dazu ausgelegt ist, eine Netzwechselspannung (V) in eine Leuchtmittelversorgungsspannung (Vdd) von 48 Volt zu richten.

13. Verfahren (M) zum Ansteuern von LED-Leuchtmitteln (17a) einer Leuchte (10) gemäß Anspruch 9, umfassend:
Versorgen (M1) des ersten Leuchtmittelmoduls (23a), mit der durch den Gleichrichter (21) erzeugten Gleichspannung;
Erzeugen (M2) des digitalen Leuchtmittelsteuersignals (Ca) durch den Steuersignalgenerator (24);
Einspeisen (M3) des digitalen Leuchtmittelsteuersignals (Ca) in den ersten Digital-Analog-Wandler (26a);
Wandeln (M4) des digitalen Leuchtmittelsteuersignals (Ca) in das analoge Leuchtmittelsteuersignal (Ta) durch den Digital-Analog-Wandler (26a); und
Einspeisen (M5) des analogen Leuchtmittelsteuersignals (Ta) in den Steuereingang des ersten Stromreglers (27a), welcher in Reihe zu den ein oder mehreren ersten Leuchtmitteln (17a) geschaltet ist.

## Claims

1. Control device (20) for LED lighting means of a light (10), comprising:
a first lighting means module (23a), which has one or more lighting means receptacles (28a, 28b), each for receiving a first LED lighting means (17a) of the light (10);
a first current regulator (27a) arranged in the first lighting means module (23a) and connected in series with the one or more first lighting means receptacles (28a, 28b);
a control signal generator (24) configured to generate a digital lighting means control signal (Ca) on the basis of a received digital control signal and to provide it at a generator output; and
a first digital-analogue convertor (26a) connected between the generator output of the control signal generator (24) and a control input of the first current regulator (27a) and configured to convert the digital lighting means control signal (Ca) of the control signal generator (24) into an analogue lighting means control signal (Ta) and to feed it into the control input of the current regulator (27a),
**characterised**
**in that** the first current regulator (27a) is a linear regulator implemented as an adjustable constant current source and has an operation amplifier (OPV), a base current limit resistor (RB), a bipolar transistor (B) and a compensation and oscillation damping circuit (CCK, RK), the output of the operator amplifier (OPV) being fed back to the base of the bipolar transistor (B) via the base current limit resistor (RB) and to the inverting input of the operation amplifier (OPV) via the compensation and oscillation damping circuit (CK, RK), and further has a shunt element (RS) for measuring the emitter current of the bipolar transistor (B) and a feedback resistor (RR) between the shunt element (RS) and the inverting input of the operation amplifier (OPV).

2. Control device (20) according to claim 1, further comprising:
a rectifier (21) configured to rectify an alternating voltage (V) into a lighting means supply voltage (Vdd), the first lighting means module (23a) being connected to the voltage output (21a) of the rectifier (21), and the control signal generator (24) being supplied with supply voltage by means of the rectifier (21).

3. Control device (20) according to claim 2, further comprising:
a direct current convertor (25) connected between the voltage output (21a) of the rectifier (21) and a supply input (24a) of the control signal generator (24).

4. Control device (20) according to claim 3, wherein the direct current convertor is a step-down convertor.

5. Control device (20) according to any of claims 1 to 4, wherein the first digital-analogue convertor (26a) has a series connection of a potential divider and a first- or higher-order low-pass.

6. Control device (20) according to any of claims 1 to 5, wherein the control signal generator (24) has an input interface (22a) and is configured to generate the digital lighting means control signal (Sa) on the basis of the digital control signal received at the input interface (22a), in particular of a DALI control signal or ZigBee control signal (S).

7. Control device (20) according to claim 6, wherein the digital control signal specifies a target value for dimming the or a plurality of LED lighting means (17a) of the first lighting means module (23a).

8. Control device (20) according to any of claims 1 to 7, further comprising:
at least one second lighting means module (23b) which is connected to the voltage output (21a) of the rectifier (21) and has one or more second LED lighting means (17b);
at least one current regulator (27b) arranged in the second lighting means module (23b) and connected in series with the one or more second LED lighting means (17b); and
at least one second digital-analogue convertor (26b) connected between the generator output of the control signal generator (24) and a control input of the second current regulator (27b) and configured to convert the digital lighting means control signal (Cb) of the control signal generator (24) into an analogue lighting means control signal (Tb) and to feed it into the control input of the second current regulator (27b).

9. Light (10) comprising a housing component (11), LED lighting means and a control device (20) according to any of claims 2 to 8.

10. Light (10) according to claim 9, wherein the control signal generator (24) is arranged on a control circuit board (15), the first lighting means module (23a) and the first digital-analogue convertor (26a) are arranged on a lighting means support circuit board (18) separate from the control circuit board (15), and the control circuit board (15) is connected via a wire to the lighting means support circuit board (18).

11. Light (10) according to either claim 9 or claim 10, wherein the one or more first LED lighting means (17a) have high-voltage LEDs.

12. Light (10) according to any of claims 9 to 11, wherein the rectifier (21) is configured to rectify a mains alternating voltage (V) into a lighting means supply voltage (Vdd) of 48 volts.

13. Method (M) for controlling LED lighting means (17a) of a light (10) according to claim 9, comprising:
supplying (M1) the first lighting means module (23a) with the direct current generated by the rectifier (21);
generating (M2) the digital lighting means control signal (Ca) by way of the control signal generator (24);
feeding (M3) the digital lighting means control signal (Ca) into the first digital-analogue convertor (26a);
converting (M4) the digital lighting means control signal (Ca) into the analogue lighting means control signal (Ta) by way of the digital analogue convertor (26a); and
feeding (M5) the analogue lighting means control signal (Ta) into the control input of the first current regulator (27a), which is connected in series with the one or more first lighting means (17a).

## Revendications

1. Dispositif d'attaque (20) pour des moyens d'éclairage à LED d'un luminaire (10), comprenant :
un premier module de moyens d'éclairage (23a) qui présente un ou plusieurs logements de moyen d'éclairage (28a, 28b) destinés à loger chacun un premier moyen d'éclairage à LED (17a) du luminaire (10) ;
un premier régulateur de courant (27a) disposé dans le premier module de moyens d'éclairage (23a), qui est monté en série avec lesdits un ou plusieurs premiers logements de moyen d'éclairage (28a, 28b) ;
un générateur de signal de commande (24) qui est conçu pour générer un signal de commande de moyen d'éclairage (Ca) sur la base d'un signal de commande numérique reçu et pour le mettre à disposition à une sortie de générateur ; et
un premier convertisseur numérique-analogique (26a) qui est couplé entre la sortie de générateur du générateur de signal de commande (24) et une entrée de commande du premier régulateur de courant (27a) et est conçu pour convertir le signal de commande de moyen d'éclairage numérique (Ca) du générateur de signal de commande (24) en un signal de commande de moyen d'éclairage analogique (Ta) et pour l'injecter à l'entrée de commande du premier régulateur de courant (27a),
**caractérisé en ce**
**que** le premier régulateur de courant (27a) est un régulateur linéaire qui est mis en œuvre comme source de courant constant réglable et qui présente un amplificateur opérationnel (OPV), une résistance de limitation de courant de base (RB), un transistor bipolaire (B) et un circuit de compensation et d'amortissement des vibrations (CK, RK), la sortie de l'amplificateur opérationnel (OPV) étant rebouclée sur à la base du transistor bipolaire (B) par l'intermédiaire de la résistance de limitation de courant de base (RB) et, par l'intermédiaire du circuit de compensation et d'amortissement des vibrations (CK, RK), sur l'entrée inverseuse de l'amplificateur opérationnel (OPV), et qui présente en outre un élément de shuntage (RS) pour mesurer le courant d'émetteur du transistor bipolaire (B), ainsi qu'une résistance de rétroaction (RR) entre l'élément de shuntage (RS) et l'entrée inverseuse de l'amplificateur opérationnel (OPV).

2. Dispositif d'attaque (20) selon la revendication 1, comprenant en outre :
un redresseur (21) qui est conçu pour redresser une tension alternative (V) en une tension d'alimentation de moyen d'éclairage (Vdd),
dans lequel le premier module de moyens d'éclairage (23a) est couplé à une sortie de tension (21a) du redresseur (21) et dans lequel le générateur de signal de commande (24) est alimenté en tension d'alimentation au moyen du redresseur (21) .

3. Dispositif d'attaque (20) selon la revendication 2, comprenant en outre :
un convertisseur continu-continu (25) qui est connecté entre la sortie de tension (21a) du redresseur (21) et une entrée d'alimentation (24a) du générateur de signal de commande (24).

4. Dispositif d'attaque (20) selon la revendication 3, dans lequel le convertisseur continu-continu est un convertisseur abaisseur de tension.

5. Dispositif d'attaque (20) selon l'une des revendications 1 à 4, dans lequel le premier convertisseur numérique-analogique (26a) présente une connexion en série d'un diviseur de tension et d'un filtre passe-bas d'ordre un ou supérieur.

6. Dispositif d'attaque (20) selon l'une des revendications 1 à 5, dans lequel le générateur de signal de commande (24) présente une interface d'entrée (22a) et est conçu pour générer le signal de commande de moyen d'éclairage numérique (Sa) sur la base du signal d'attaque numérique, en particulier d'un signal de commande DALI ou d'un signal de commande ZigBee (S), reçu à l'interface d'entrée (22a).

7. Dispositif d'attaque (20) selon la revendication 6, dans lequel le signal d'attaque numérique indique une valeur de consigne pour la gradation desdits un ou plusieurs moyens d'éclairage à LED (17a) du premier module de moyens d'éclairage (23a).

8. Dispositif d'attaque (20) selon l'une des revendications 1 à 7, comprenant en outre :
au moins un deuxième module de moyens d'éclairage (23b) couplé à la sortie de tension (21a) du redresseur (21) et qui présente un ou plusieurs deuxièmes moyens d'éclairage à LED (17b) ;
au moins un régulateur de courant (27b) disposé dans le deuxième module de moyens d'éclairage (23b), qui est monté en série avec lesdits un ou plusieurs deuxièmes moyens d'éclairage à LED (17b) ; et
au moins un deuxième convertisseur numérique-analogique (26b) qui est couplé entre la sortie de générateur du générateur de signal de commande (24) et une entrée de commande du deuxième régulateur de courant (27b) et qui est conçu pour convertir le signal de commande de moyen d'éclairage numérique (Cb) du générateur de signal de commande (24) en un signal de commande de moyen d'éclairage analogique (Tb) et pour l'injecter à l'entrée de commande du deuxième régulateur de courant (27b).

9. Luminaire (10), comprenant un composant de boîtier (11), des moyens d'éclairage à LED et un dispositif d'attaque (20) selon l'une des revendications 2 à 8.

10. Luminaire (10) selon la revendication 9, dans lequel le générateur de signal de commande (24) est disposé sur une carte de commande (15), le premier module de moyens d'éclairage (23a) et le premier convertisseur numérique-analogique (26a) sont disposés sur une carte support de moyens d'éclairage (18) distincte de la carte de commande (15) et la carte de commande (15) est reliée à la carte support de moyens d'éclairage (18) par un câble.

11. Luminaire (10) selon l'une des revendications 9 à 10, dans lequel lesdits un ou plusieurs premiers moyens d'éclairage à LED (17a) présentent des LED haute tension.

12. Luminaire (10) selon l'une des revendications 9 à 11, dans lequel le redresseur (21) est conçu pour redresser une tension alternative du secteur (V) en une tension d'alimentation de moyen d'éclairage (Vdd) de 48 volts.

13. Procédé (M) d'attaque de moyens d'éclairage à LED (17a) d'un luminaire (10) selon la revendication 9, comprenant les étapes consistant à :
alimenter (M1) le premier module de moyens d'éclairage (23a) avec la tension continue générée par le redresseur (21) ;
générer (M2) le signal de commande de moyen d'éclairage numérique (Ca) par le générateur de signal de commande (24) ;
injecter (M3) le signal de commande de moyen d'éclairage numérique (Ca) au premier convertisseur numérique-analogique (26a) ;
convertir (M4) le signal de commande de moyen d'éclairage numérique (Ca) en signal de commande de moyen d'éclairage analogique (Ta) par le convertisseur numérique-analogique (26a) ; et
injecter (M5) le signal de commande de moyen d'éclairage analogique (Ta) à l'entrée de commande du premier régulateur de courant (27a) qui est monté en série avec lesdits un ou plusieurs premiers moyens d'éclairage (17a).
